# EUROPÄISCHE PATENTSCHRIFT

(11) **EP 1 297 604 B1**
(45) Veröffentlichungstag und Bekanntmachung des Hinweises auf die Patenterteilung: **12.01.2011**
(21) Anmeldenummer: 01962543.3
(22) Anmeldetag: 25.06.2001
(51) Int. Cl.: H02K 1/17

(54) **BÜGELFEDER**
SHACKLE SPRING
RESSORT EN ETRIER

(30) Priorität: 27.06.2000 DE 10031254
(43) Veröffentlichungstag der Anmeldung: 02.04.2003
(73) Patentinhaber: ROBERT BOSCH GMBH, 70442 Stuttgart (DE)
(72) Erfinder: MAHFOUD, Samir, 77815 Buehl (DE); MARTEL, Guillaume, 76275 Ettlingen (DE)
(86) Internationale Anmeldenummer: PCT/DE2001/002290
(87) Internationale Veröffentlichungsnummer: WO 2002/001699

(56) Entgegenhaltungen:
- DE-A- 19 501 750
- GB-A- 2 209 880
- US-A- 4 412 145
- US-A- 5 391 063
- US-A- 5 959 386
- PATENT ABSTRACTS OF JAPAN vol. 018, no. 504 (E-1608), 21. September 1994 (1994-09-21) & JP 06 169538 A (MATSUSHITA ELECTRIC WORKS LTD), 14. Juni 1994 (1994-06-14)

## Beschreibung

### Stand der Technik

Die Erfindung geht aus von einer Bügelfeder zur Befestigung von zumindest einem in einem Gehäuse eines Elektromotors untergebrachten Bauteil nach er Gattung des Anspruchs 1. Die JP-A-01 71971 offenbart eine Bügelfeder entsprechend dem Gberbegriff des Anspruchs 1. Aus der US-PS 5,391, 063 ist eine Bügelfeder bekannt, die U-förmig ist und zwei Magneten in einem Motorgehäuse eines Elektromotors befestigt. Die Bügelfeder hat jedoch nur eine Biegezone. Ein hoher mechanischer Beanspruchungsgrad der Bügelfeder in der Biegezone führt zu einer erheblichen mechanischen Spannungskonzentration und zum schnellen Bruch der Feder.

Bei einer Bügelfeder nach dem Stand der Technik ist man deshalb gezwungen, Federstahl als Material einzusetzen. Da Federstahl magnetisch leitend ist, ergeben sich relevante Magnetflußverluste. Dies führt zur Verringerung des Wirkungsgrads des Motors oder zu einer Motorbauraumvergrößerung bzw. zur Verteuerung des Bauteils.

### Vorteile der Erfindung

Die erfindungsgemäße Bügelfeder hat demgegenüber den Vorteil, dass auf einfache Art und Weise die mechanische Beanspruchung der Bügelfeder stark reduziert und die Federkraft erhöht wird.

Das geringe resultierende Spannungsniveau der erfindungsgemäßen Bügelfeder erlaubt den Einsatz entweder eines kostengünstigeren Materials oder eines schwachmagnetischen Edelstahls. Der Einsatz von schwachmagnetischem Edelstahl sorgt für einen besseren Wirkungsgrad des Motors.
Die erfindungsgemäße Bügelfeder erlaubt es, bei verhältnismäßig geringem Beanspruchungsgrad des Materials eine hohe Rückstellkraft zu erzeugen. Weiterhin wird durch die Form der Bügelfeder das Abspringverhalten einer Bügelfeder nach dem Stand der Technik beseitigt.
Die gertellte Auffabe wird durch eine Bügelfeder mit den Merkmalen des Anspruchs 1 gelöst.

Es ist vorteilhaft, dass ein erster und/oder zweiter Schenkel einer U-Form zumindest teilweise an Bauteilen anliegen, da dadurch die Federkraft der Bügelfeder optimal an den Bauteilen angreift.

Es ist vorteilhaft eine Breite der Bügelfeder kleiner als einen Abstand zwischen zwei gegenüberliegenden V-förmigen Abschnitten auszuführen, da dadurch ein Einhakverhalten von Bügelfedern miteinander auszuschließen ist.

### Zeichnung

Ausführungsbeispiele der Erfindung sind in der Zeichnung vereinfacht dargestellt und in der nachfolgenden Beschreibung näher erläutert.

Es zeigen
Figur 1 eine erfindungsgemäße Bügelfeder im unverformten Zustand,
Figur 2 eine erfindungsgemäße Bügelfeder im eingebauten Zustand in einem Gehäuse zwischen zwei Bauteilen, und Figur 3 eine weitere erfindungsgemäße Bügelfeder.

### Beschreibung der Ausführungsbeispiele

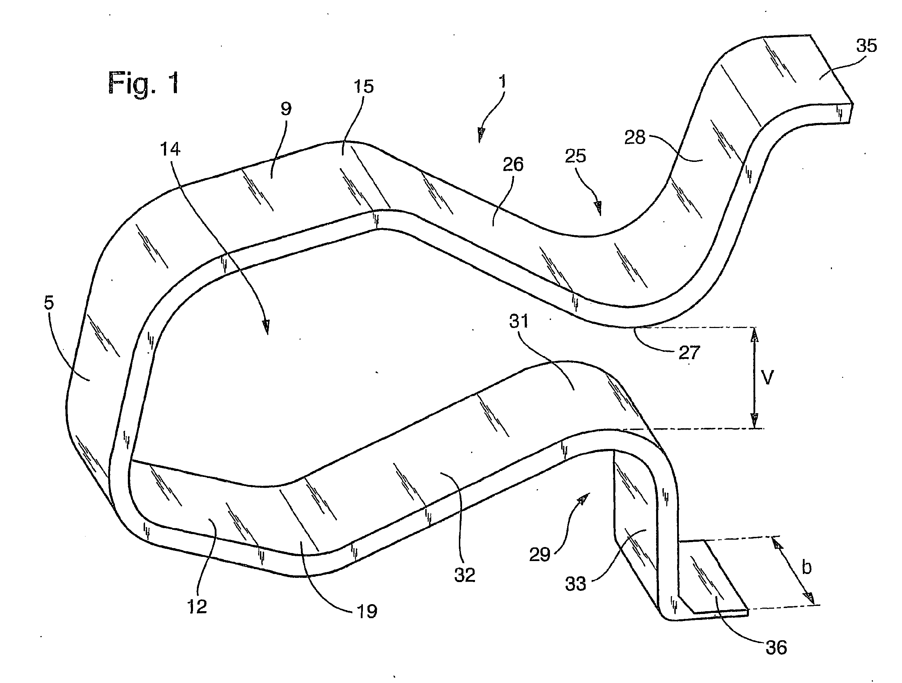

Figur 1 zeigt eine erfindungsgemäße Bügelfeder 1 im unverformten Zustand.
Die Bügelfeder 1 hat einen U-Boden 5. An den U-Boden 5 schließt sich in beiden Richtungen ein erster Schenkel 9 und ein zweiter Schenkel 12 an. Der U-Boden 5 und die Schenkel 9, 12 bilden eine U-Form 14.
An ein Ende 15 des ersten Schenkels 9 schließt sich eine erste V-Form 25 an, die aus zwei Schenkeln 26, 28 gebildet wird, die einen gemeinsamen Schenkelschnittpunkt 27 haben. Die zwei Schenkel 26, 28 der V-Form 25 öffnen sich nach aussen. An ein Ende 19 des zweiten Schenkels 12 schließt sich bspw. eine zweite V-Form 29 mit einem Schenkelschnittpunkt 31 an. Auch die zweite V-Form 29 hat zwei Schenkel 32, 33 und ist nach außen hin geöffnet. Die erste V-Form 25 und die zweite V-Form 29 liegen sich bspw. gegenüber und die Schenkelschnittpunkte 27, 31 haben einen Abstand v voneinander.
Die Bügelfeder 1 ist bspw. aus Bandmaterial mit einem rechteckförmigen Querschnitt, der eine Breite b hat, gebogen. Um ein Einhakverhalten von losen Bügelfedern 1 in einem Vorratsbehälter miteinander auszuschließen, ist es sinnvoll, dass der Abstand v breiter ist,als die Breite b der Bügelfeder 1.

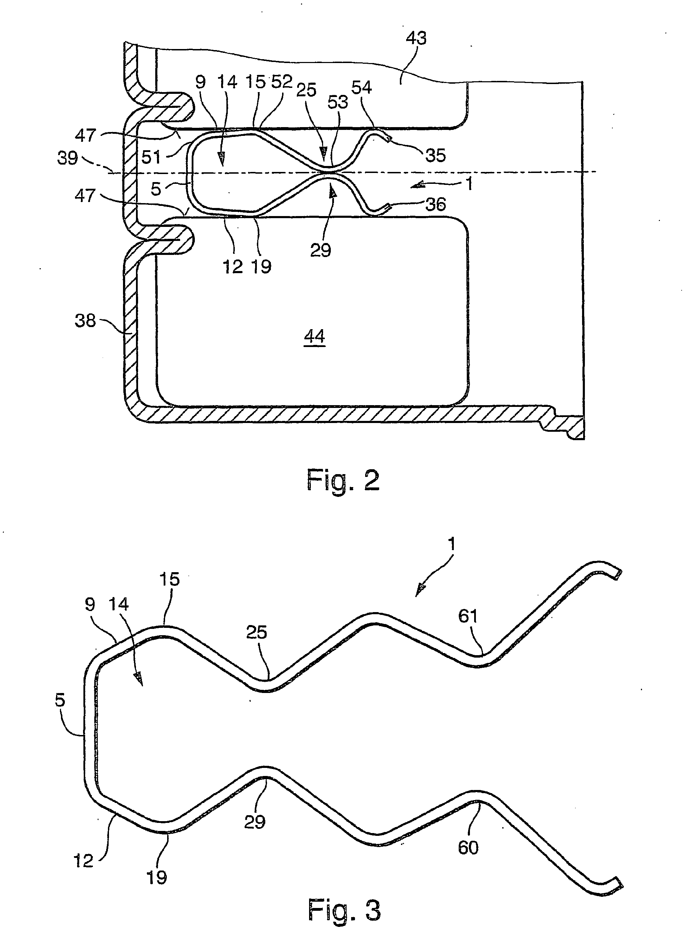

Figur 2 zeigt die Bügelfeder 1 im eingebauten Zustand. Die Bügelfeder 1 ist in einem Gehäuse 38 eines Elektromotors eingebaut und befestigt dort ein erstes Bauteil 43 und ein zweites Bauteil 44 an dem Gehäuse 38 durch Verspannung. In diesem Ausführungsbeispiel sind es Magneten 43, 44 im Gehäuse 38 eines Stators. Als zu befestigende Bauteile in einem Gehäuse 38 eines Elektromotors kommen z.B. auch magnetische Rückschlusselemente in Frage.
Das Gehäuse 38 hat eine Mittellinie 39.
Die Magneten 43, 44 sind beispielsweise einer inneren Form des Gehäuses 38 angepaßt und liegen innerhalb des Gehäuses 38 zumindest teilweise unmittelbar an einer Innenwand des Gehäuses 38 an. Jeweils eine Bügelfeder 1 befindet sich in diesem Ausführungsbeispiel zwischen den Magneten 43, 44. Die Magneten 43, 44 haben Endflächen 47. Die Bügelfeder 1 greift an den Endflächen 47 der Magnete 43, 44 an. Jeder Magnet 43, 44 wird durch die Federkraft zweier Bügelfedern 1 an das Gehäuse 38 fest angedrückt.
Statt der zweiten Bügelfeder 1 kann beispielsweise auch ein Vorsprung aus der Innenwand des Gehäuses 38 vorhanden sein, an dem die Endflächen 47 der zwei Magneten 43, 44 anliegen. Zur Befestigung der Magneten 43, 44 in dem Gehäuse 38 reicht dann eine Bügelfeder 1 aus, die sich zwischen den beiden anderen Endflächen 47 der Magneten 43, 44 befindet.

Wenn nur ein Bauteil in einem Gehäuse 38 zu befestigen ist, muss für die Bügelfeder 1 ein zweiter Vorsprung aus der Innenwand des Gehäuses 38 vorhanden sein, an dem sie sich abstützen kann.

Die Bügelfeder 1 hat einen ersten Bereich 51, am Übergang zwischen U-Boden 5 und den Schenkeln 9, 12, einen zweiten Bereich 52 an den Schenkelenden 15, 19, einen dritten Bereich 53 an den Schenkelschnittpunkten 27, 31 und einen vierten Bereich 54 am Übergang der Schenkel 28, 33 zu Endabschnitten 35, 36. Die Bereiche 52 und 54 der Bügelfeder 1 werden beim Einbau zusammengedrückt und es kommt zu einer mechanischen Beanspruchung der Bereiche 51, 52 und 53. Wenn der Bereich 53 der Bügelfeder 1 zuschließt, d.h. wenn sich die beiden V-Formen 25 und 29 berühren, kommt die zweite Stufe der Federkennlinie zur Wirkung, in der die erste V-Form 25 und die zweite V-Form 29 verbogen werden.
Die Federkraft verteilt sich auf mehrere Bereiche, so dass eine Spannungsreduzierung gegenüber einer Bügelfeder nach dem Stand der Technik erfolgt.
Die symmetrische Gestaltung sowie die zwei Einführschrägen im Bereich 51 dienen zu einer einfachen und störungsfreien automatischen Montage ins Gehäuse 38.

Figur 3 zeigt ein weiteres Ausführungsbeispiel der erfindungsgemäßen Bügelfeder 1'.
Die Bügelfeder 1' entsteht durch eine Weiterbildung der Bügelfeder 1 gemäß Figur 1 dadurch, dass sich an die beiden V-Formen 25, 29 jeweils eine dritte V-Form 60 und bspw. eine vierte V-Form 61 anschließen.

## Patentansprüche

1. Bügelfeder (1, 1') zur Befestigung von zumindest zwei in einem Gehäuse (38) eines Elektromotors untergebrachten Bauteilen (43, 44), insbesondere Magneten, mit einem ersten U-förmigen Abschnitt (14), der einen ersten Schenkel (9), einen zweiten Schenkel (12) und einen U-Boden hat, wobei die Bügelfeder (1, 1') zumindest einen aus jeweils einem weiteren ersten und zweiten Schenkel (26, 28; 32, 33) gebildeten V-förmigen Abschnitt (25, 29) aufweist, der sich an den ersten (9) und/oder den zweiten Schenkel (12) anschließt und der zum Äußeren der Bügelfeder (1, 1') hin geöffnet ist, **dadurch gekennzeichnet, dass** im eingebauten Zustand der Bügelfeder (1, 1') sowohl jeweils ein Bereich (52) der beiden Schenkel (9, 12) des ersten U-förmigen Abschnitts (14) als auch ein weiterer am Übergang des weiteren zweiten Schenkels (28, 33) des V-förmigen Abschnitts (25, 29) zu einem Schenkelende (35, 36) gebildeter Bereich (54) als eine Auflage für die Bauteile (43, 44) dient und sich die beiden V-förmigen Abschnitte (25, 29) berühren.

## Claims

1. Bow spring (1, 1') for fastening at least two components (43, 44), in particular magnets, accommodated in a housing (38) of an electric motor, comprising a first U-shaped portion (14) which has a first leg (9), a second leg (12) and a U-base, wherein the bow spring (1, 1') comprises at least a V-shaped portion (25, 29) formed from in each case a further first and second leg (26, 28; 32, 33), which V-shaped portion adjoins the first (9) and/or the second leg (12) and is open towards the outside of the bow spring (1, 1'), **characterized in that**, with the bow spring (1, 1') in the installed state, both a respective region (52) of the two legs (9, 12) of the first U-shaped portion (14) and a further region (54) formed at the transition of the further second leg (28, 33) of the V-shaped portion (25, 29) to a leg end (35, 36) serve as a support for the components (43, 44) and the two V-shaped portions (25, 29) contact one another.

## Revendications

1. Ressort en étrier (1, 1') destiné à fixer au moins deux composants (43, 44), en particulier des aimants, montés dans le carter (38) d'un moteur électrique, avec une première portion en forme de U (14), qui présente une première branche (9), une deuxième branche (12) et une âme du U, le ressort en étrier (1, 1') présentant au moins une portion en forme de V (25, 29) formée à chaque fois d'une autre première et d'une autre deuxième branche (26, 28 ; 32, 33), qui se raccorde à la première (9) et/ou à la deuxième (12) branche et qui est ouverte vers l'extérieur du ressort en étrier (1, 1'), **caractérisé en ce que** dans l'état monté du ressort en étrier (1, 1'), à la fois une région (52) des deux branches (9, 12) de la première portion en forme de U (14) et une autre région (54) formée à la transition entre l'autre deuxième branche (28, 33) de la portion en forme de V (25, 29) et une extrémité de branche (35, 36), sert à chaque fois d'appui pour les composants (43, 44), et les deux portions en forme de V (25, 29) sont en contact.
